# EUROPÄISCHE PATENTSCHRIFT

(11) **EP 3 560 762 B1**
(45) Veröffentlichungstag und Bekanntmachung des Hinweises auf die Patenterteilung: **14.10.2020**
(21) Anmeldenummer: 19171329.6
(22) Anmeldetag: 26.04.2019
(51) Int. Cl.: B60R 9/042

(54) **DACHTRANSPORTVORRICHTUNG**
ROOF TRANSPORT DEVICE
DISPOSITIF DE TRANSPORT SUR LE TOIT

(30) Priorität: 27.04.2018 DE 102018003444
(43) Veröffentlichungstag der Anmeldung: 30.10.2019
(73) Patentinhaber: Compotech AG, 8570 Weinfelden (CH)
(72) Erfinder: PFIRTER, Sebastian, 4416 Bubendorf (CH); SCHWYN, Markus Andreas, 4102 Binningen (CH); TULLURI, Venkatesh, 4153 Reinach (CH)
(74) Vertreter: Patentbüro Paul Rosenich AG

(56) Entgegenhaltungen:
- DE-A1-102015 113 689
- JP-A- 2009 078 679
- US-A- 3 282 455
- US-A- 4 950 123
- US-A1- 2004 131 455
- US-A1- 2013 008 931

## Beschreibung

Die Erfindung betrifft eine Dachtransportvorrichtung zur Anordnung auf einem Fahrzeug, nach dem Oberbegriff des Anspruchs 1.

Derartige Dachtransportvorrichtungen für Fahrzeuge, wie PKW, dienen als zusätzlicher Stauraum für Gepäckstücke, Sport-Geräte, wie Skis mit Stöcken, Golf-Säcke und vieles mehr, was nicht beziehungsweise nicht mehr im Kofferraum des Fahrzeugs untergebracht werden kann.

Üblicherweise sind die Transportbehälter, auch Dachboxen genannt, so konzipiert, dass sie auch längliches Gepäck aufnehmen können. Beispielsweise werden auf das Fahrzeugdach bzw. auf Träger, wie Dachträger, die an dem Fahrzeug angeordnet sind, montierbare Transportbehälter angeboten. Derartige Transportbehälter bestehen beispielsweise aus einem Bodenteil (Unterschale) und einem Oberteil (Oberschale beziehungsweise Deckel), welche mit Scharnieren sowie einem Verschluss-System ausgerüstet sind.

Sind Träger vorgesehen, werden die Transportbehälter mit einem geeigneten Befestigungssystem an diesen Trägern befestigt. Je nach Fahrzeug kann die zusätzliche Beladung in den Transportbehältern 50 kg bis 80 kg oder mehr betragen.

Derartige Transportbehälter bieten zwar zusätzlichen Stauraum, aber stellen insbesondere kleinere Menschen vor Probleme beim Beladen bzw. Entladen der Transportbehälter. Je nach Fahrzeugmodell und insbesondere bei den heutzutage sehr verbreiteten Sport Utility Vehicle, auch SUV's genannt, benötigt man zum Beladen bzw. Entladen des Transportbehälters Hilfsmittel, wie beispielsweise einen Schemel oder eine Trittleiter, sowie unter Umständen auch körperliche Fitness und Kraft.

Des Weiteren kann es in Fahrzeug-Abstellräumen, wie in Garagen oder Unterständen, aufgrund der vorhandenen Raumhöhe zu Problemen bei der Montage des Transportbehälters sowie beim Öffnen, z. B. beim Aufschwenken, des Oberteils des Transportbehälters zum Beladen beziehungsweise Entladen derselben kommen. DE 10 2015 113689 A1 offenbart eine Dachtransportvorrichtung gemäß dem Oberbegriff des Anspruchs 1.

Die US5673831 A offenbart eine Dachtransportvorrichtung zur Anordnung auf einem Fahrzeug mit einem Transportbehälter und mit einer Auszugseinrichtung, mit welcher der Transportbehälter von einer Transportposition in eine Beladeposition überführbar ist. Die Auszugseinrichtung umfasst stationäre Führungselemente sowie an den Führungselementen relativ zu diesen verschiebliche Schiebelemente. Der Transportbehälter ist an den Schiebeelementen vorgesehen. Wird der Transportbehälter aus der Transportposition in die Beladeposition überführt, kippt dieser um eine Kippachse, womit der Füllraum im schräg nach unten ausgerichteten Unterteil des Transportbehälters nach dem Öffnen des Oberteils zugänglich ist.

Nachteilig an dieser bekannten Lösung ist, dass in der Beladeposition des Transportbehälters die Gesamthöhe aus der Höhe des Fahrzeuges und des höchsten Punkts des Transportbehälters zunimmt. Des Weiteren können Inhalte, die nicht zusätzlich innerhalb des Unterteils des Transportbehälters gesichert sind, infolge der schrägen Ausrichtung des Unterteils des Transportbehälters in der Beladeposition aus diesem herausfallen.

Die US3531006A offenbart eine Dachtransportvorrichtung zur Anordnung auf einem Fahrzeug mit einem Transportbehälter und mit einer Führungseinrichtung, mit welcher der Transportbehälter von einer Transportposition in eine Beladeposition überführbar ist. Die Führungseinrichtung führt den Transportbehälter vom Dach des Fahrzeuges über dessen Heck und stellt über einen ausschwenkbaren Stützmechanismus eine waagrechte Ausrichtung des Transportbehälters sicher. In dieser Beladeposition erstreckt sich der Transportbehälter über seine ganze Länge hinter dem Fahrzeug zusätzlich zur Fahrzeuglänge.

Nachteilig an dieser bekannten Lösung ist, dass eine komplexe Konstruktion erforderlich ist, welche sich nicht nur über das Dach, sondern auch noch über das Heck des Fahrzeuges erstreckt. Zudem erhöht sich das Gesamtgewicht massgeblich, so dass nur eine sehr beschränkte Zuladung in dem Transportbehälter zulässig ist. Des Weiteren ist zum Beladen dieses Transportbehälters ein grosser Platzbedarf hinter dem Fahrzeug erforderlich, der im täglichen Gebrauch zumeist nicht zur Verfügung steht.

Die US2006/0133914A1 offenbart eine Dachtransportvorrichtung zur Anordnung auf einem Fahrzeug mit einem Transportbehälter und mit einer Auszugseinrichtung, mit welcher der Transportbehälter von einer Transportposition in eine Beladeposition überführbar ist. Die Auszugseinrichtung umfasst zwei stationäre Führungselemente sowie ein an den Führungselementen relativ zu diesen verschiebliches Schiebelement. Das Schiebeelement umfasst eine Hebeeinrichtung, die analog einer Hebeeinrichtung eines Gabelstaplers ausgebildet ist. Auf den Gabeln dieser Hebevorrichtung ist ein Transportbehälter vorgesehen.

Nachteilig an dieser bekannten Lösung ist, dass eine komplexe Konstruktion mit einer Vielzahl von Teilen erforderlich ist, welche zudem das Gesamtgewicht massgeblich erhöht, so dass nur eine sehr beschränkte Zuladung in dem Transportbehälter zulässig ist.

Die US2004/0131455A1 offenbart eine Dachtransportvorrichtung zur Anordnung auf einem Fahrzeug mit einem Transportbehälter und mit einer Auszugseinrichtung, mit welcher der Transportbehälter von einer Transportposition in eine Beladeposition überführbar ist. Die Auszugseinrichtung umfasst stationäre Führungselemente sowie an den Führungselementen relativ zu diese verschiebliche Schiebelemente. Der Transportbehälter ist an den Schiebeelementen vorgesehen.

Nachteilig an dieser bekannten Lösung ist, dass zur Aufnahme der auftretenden Kräfte die Elemente der Auszugsvorrichtung und insbesondere der Führungselemente und der Schiebeelemente diese massiv ausgebildet werden müssen, was zu einem hohen Gesamtgewicht der Dachtransportvorrichtung und somit zu einer Reduktion der zulässigen Zuladung in dem Transportbehälter führt.

Aufgabe der vorliegenden Erfindung ist es somit, eine Dachtransportvorrichtung zu schaffen, welche die vorgenannten Nachteile nicht aufweist und insbesondere eine hohe Beladung des Transportbehälters sowie eine einfache Beladung des Transportbehälters ermöglicht.

Die Aufgabe wird durch die Merkmale des unabhängigen Anspruchs gelöst. Vorteilhafte Weiterbildungen sind in den abhängigen Patentansprüchen sowie in den Figuren dargelegt.

Gemäss der Erfindung weist eine Dachtransportvorrichtung zur Anordnung auf einem Fahrzeug einen Transportbehälter und eine Auszugseinrichtung auf, mit welcher der Transportbehälter von einer Transportposition in eine Beladeposition überführbar ist, wobei die Auszugseinrichtung zumindest ein stationäres Führungselement sowie zumindest ein an dem Führungselement relativ zu diesem verschiebliches Schiebelement umfasst, und der Transportbehälter an dem zumindest einen Schiebeelement vorgesehen ist. Ein überlappender Bereich des zumindest einen Schiebeelementes mit dem zumindest einen Führungselement ist in der Beladeposition grösser als in der Transportposition.

Somit weist in der Beladeposition, in welcher die Auszugseinrichtung aufgrund des auf diese wirkenden Momentes unter grösster Belastung ist, die Auszugseinrichtung einen grösseren Bereich mit einer Materialverdopplung auf, so dass das zumindest eine Führungselement sowie das zumindest eine Schiebeelement geringere Materialstärken aufweisen können, als bei den bisher bekannten Ausführungen. Dadurch weist auch die gesamte Dachtransportvorrichtung ein geringeres Gewicht als bei den bisher bekannten Ausführungen auf, womit mehr zulässige Zuladung dem Anwender zur Verfügung steht.

Vorzugsweise umfasst der Transportbehälter ein Unterteil und ein Oberteil, wobei der Unterteil über eine Hebeleinrichtung mit dem Oberteil verbunden und zum Beladen des Transportbehälters relativ zu dem Oberteil versetzbar ist. Durch einen einfach ausgestaltbaren Hebelmechanismus ist der Transportbehälter mittels die durch das zumindest eine Führungselement sowie das zumindest eine Schiebeelement gebildete Linearführung seitlich aus dem Perimeter des Fahrzeugs bewegbar und der Unterteil mittels der Hebeleinrichtung seitlich und nach unten ausschwenkbar. Das Oberteil bleibt dabei auf fixer Höhe und das Unterteil lässt sich auf eine bequeme, einfach zugängliche Beladehöhe absenken. Sämtliche Manipulationen an dem Transportbehälter, wie das Öffnen, das Schliessen und das Beladen, können von einer einzelnen Person ohne grossen Kraftaufwand durchgeführt werden.

Bevorzugterweise ist die Hebeleinrichtung eine Parallelogramm-Einrichtung, welche eine einfache Ausgestaltung der Hebeleinrichtung ermöglicht und gleichzeitig eine gezielte Führung des Unterteils des Transportbehälters bei dessen Versetzvorgangs gewährleistet. Beim Versetzvorgang kann der Unterteil nicht verkippen.

Bevorzugt ist zumindest ein Federelement zur Dämpfung beziehungsweise zur Unterstützung des Versetzvorgangs des Unterteils des Transportbehälters vorgesehen ist, womit die Belastungen auf die einzelnen Elemente der Dachtransportvorrichtung reduziert und dadurch die Gebrauchstauglichkeit derselben wesentlich erhöht wird. Zudem wird ein sanftes Absenken und erleichtertes Anheben des Unterteils des Transportbehälters ermöglicht.

Bevorzugterweise ist das zumindest eine Federelement einstellbar, so dass die Dachtransportvorrichtung auf besondere Randbedingungen justierbar ist.

Weiter bevorzugt ist das zumindest eine Federelement gesteuert, womit die Dachtransportvorrichtung noch einfacher auf besondere Randbedingungen justierbar ist. Beispielsweise ist das zumindest eine Federelement bezüglich des Beladungsgewichts des Transportbehälters gesteuert, so dass bei einem hohen Beladungsgewicht eine grössere Federkraft wirkt als bei einem niedrigen Beladungsgewicht.

Das zumindest eine Federelement umfasst beispielsweise eine Gas-Feder.

Vorzugsweise ist zumindest ein Antrieb zum Überführen des Transportbehälters von der Transportposition in die Beladeposition beziehungsweise von der Beladeposition in die Transportposition vorgesehen, was die Bedienung der Dachtransportvorrichtung vereinfacht.

Bevorzugt ist zumindest ein Antrieb zum Versetzen des Unterteils des Transportbehälters relativ zum Oberteil des Transportbehälters vorgesehen, was das Öffnen und Schliessen des Transportbehälters und somit die Bedienung des Transportbehälters vereinfacht.

Bevorzugterweise umfasst einer dieser Antriebe einen Elektromotor, welcher eine einfache Steuerung der Bewegungsvorgänge ermöglichen. Weiter bevorzugt ist zumindest einer dieser Antriebe mittels einer Fernbedienung bedienbar, womit die Bedienung für den Anwender zusätzlich vereinfacht wird.

Ein einer bevorzugten Ausgestaltung ist ein gemeinsamer Antrieb für sämtliche Bewegungsvorgänge vorgesehen, womit die Dachtransportvorrichtung kompakt und mit einer geringen Anzahl von Bauteilen ausführbar ist.

Bevorzugt ist zumindest eine Verriegelungseinrichtung vorgesehen, welche den Unterteil des Transportbehälters mit dem Oberteil des Transportbehälters, insbesondere in der Transportposition, verriegelt, womit ein unbeabsichtigtes Öffnen des Transportbehälters, insbesondere während der Fahrt verhindert ist.

Weiter bevorzugt ist zumindest eine Verriegelungseinrichtung vorgesehen, welche den Transportbehälter, insbesondere in der Transportposition, verriegelt, womit ein unbeabsichtigtes seitliches Verschieben des Transportbehälters, insbesondere während der Fahrt verhindert ist.

Weiter bevorzugt ist zumindest eine Verriegelungseinrichtung vorgesehen, welche die Auszugseinrichtung, insbesondere in der Transportposition, verriegelt, womit ein unbeabsichtigtes seitliches Verschieben des Transportbehälters, insbesondere während der Fahrt ebenfalls verhindert ist. Besonders bevorzugt sind bei mehr als einer Verriegelungseinrichtung zumindest deren zwei Verriegelungseinrichtungen miteinander gekoppelt oder verbunden, was die Sicherheit zusätzlich erhöht. In einer alternativen Ausführung dazu ist nur eine Verriegelungseinrichtung vorgesehen, welche einerseits den Unterteil des Transportbehälters mit dem Oberteil des Transportbehälters, verriegelt und gleichzeitig auch den Transportbehälter und/oder die Auszugseinrichtung verriegelt, was die Anzahl von Bauteilen der Dachtransportvorrichtung reduziert.

Vorzugsweise ist die zumindest eine Verriegelungseinrichtung mit einer Zentralverriegelungseinrichtung des Fahrzeuges gekoppelt, womit im geschlossenen Zustand des Fahrzeuges auch der Transportbehälter und/oder die Auszugseinrichtung verriegelt ist.

Beispielsweise wird ein Funksystem vorgesehen, das auf die Frequenz des Fahrzeugschlüssels einstellbar ist. Anstelle von einer automatischen Verriegelung kann ein solcher Fahrzeugschlüssel auch dem manuellen Verriegeln und Entriegeln der zumindest einen Verriegelungseinrichtung dienen.

Bevorzugt umfasst die zumindest eine Verriegelungseinrichtung einen Verriegelungshebel und ein Rampenelement, wobei der Verriegelungshebel über das Rampenelement in eine Verriegelungsposition überführbar ist. Der Verriegelungshebel ist dabei derart ausgebildet, dass der Verriegelungshebel aus der Verriegelungsposition in eine Entriegelungsposition überführbar ist. Mittels des Rampenelements ist eine einfache Steuerung des Verriegelungshebels von einer Entriegelungsposition in eine Verriegelungsposition sowie von einer Verriegelungsposition in eine Entriegelungsposition realisierbar.

Vorzugsweise ist zumindest ein Entriegelungselement vorgesehen, über welches der Verriegelungshebel aus der Verriegelungsposition in die Entriegelungsposition überführbar ist. Das zumindest eine Entriegelungselement erleichtert die Betätigung des Verriegelungshebels, wobei gleichzeitig ein unbeabsichtigtes Entriegeln desselben verhindert ist. Weiter bevorzugt ist der Verriegelungshebel federbeaufschlagt, womit der Verriegelungshebel in der entsprechenden Position gehalten wird. Vorteilhaft wirkt dabei die Federkraft in Richtung der Verriegelungsposition des Verriegelungshebels, was ein unbeabsichtigtes Entriegeln desselben zusätzlich verhindert.

Bevorzugt ist zumindest eine Blockiereinrichtung vorgesehen, welche einen Versetzvorgang des Unterteils des Transportbehälters relativ zum Oberteil des Transportbehälters im teilweise ausgefahrenen Zustand der Auszugseinrichtung verhindert, womit Beschädigungen am Fahrzeug durch ein frühzeitiges Öffnen des Transportbehälters verhindert werden.

Weiter bevorzugt ist die zumindest eine Blockiereinrichtung Bestandteil einer der zumindest einen Verriegelungseinrichtungen, womit eine kompakte Ausgestaltung bei Gewährleistung einer entsprechenden Sicherheit ermöglicht ist.

Vorzugsweise ist zumindest eine Energieversorgungseinrichtung zur Versorgung mit Energie des zumindest einen Antriebs und/oder der zumindest einen Verriegelungsvorrichtung und/oder der zumindest einen Blockiereinrichtung vorgesehen, womit diese mit der erforderlichen Energie versorgt werden können. Die zumindest eine Energieversorgungseinrichtung kann ein Bestandteil des Fahrzeuges sein. Besonders bevorzugt ist zumindest eine separate Energieversorgungseinrichtung an der Dachtransportvorrichtung, z. B. in dem Transportbehälter, vorgesehen, womit die Dachtransportvorrichtung autonom und somit ohne Verbindung zum Fahrzeug betreibbar ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine Ausführungsform einer erfindungsgemässen Dachtransportvorrichtung in einer Transportstellung des Transportbehälters in einer Frontansicht,
- Fig. 2: die erfindungsgemässe Dachtransportvorrichtung gem. Fig. 1 in einer Draufsicht,
- Fig. 3: einen Detailausschnitt der erfindungsgemässen Dachtransportvorrichtung gem. Fig. 1,
- Fig. 4: einen Detailausschnitt der erfindungsgemässen gem. Fig. 1 in einer Frontansicht,
- Fig. 5: die erfindungsgemässe Dachtransportvorrichtung in einer Beladestellung der Dachbox in einer Frontansicht,
- Fig. 6: die erfindungsgemässe der erfindungsgemässen Dachtransportvorrichtung gem. Fig. 5 in einer Draufsicht,
- Fig. 7: einen Detailausschnitt der erfindungsgemässen Dachtransportvorrichtung gem. Fig. 5,
- Fig. 8: einen Detailausschnitt der erfindungsgemässen Dachtransportvorrichtung gem. Fig. 5 in einer Frontansicht,
- Fig. 9: die erfindungsgemässe Dachtransportvorrichtung in der Beladestellung des Transportbehälters gem. Fig. 5 in einer perspektivischen Darstellung,
- Figs. 10A-E: eine Variante einer Verriegelungseinrichtung mit verschiedenen Positionen eines Bedienelements in einer schematischen Darstellung,
- Figs. 11A-D: die erfindungsgemässe Dachtransportvorrichtung in einzelnen Schritten in einer vereinfachten schematischen Darstellung,
- Fig. 12: eine Variante einer Blockiereinrichtung in einer perspektivischen Darstellung,
- Fig. 13: die Blockiereinrichtung gem. Fig. 12 in einer weiteren perspektivischen Darstellung, und
- Fig. 14: die Blockiereinrichtung gem. Fig. 12 im verriegelten Zustand in einer perspektivischen Darstellung.

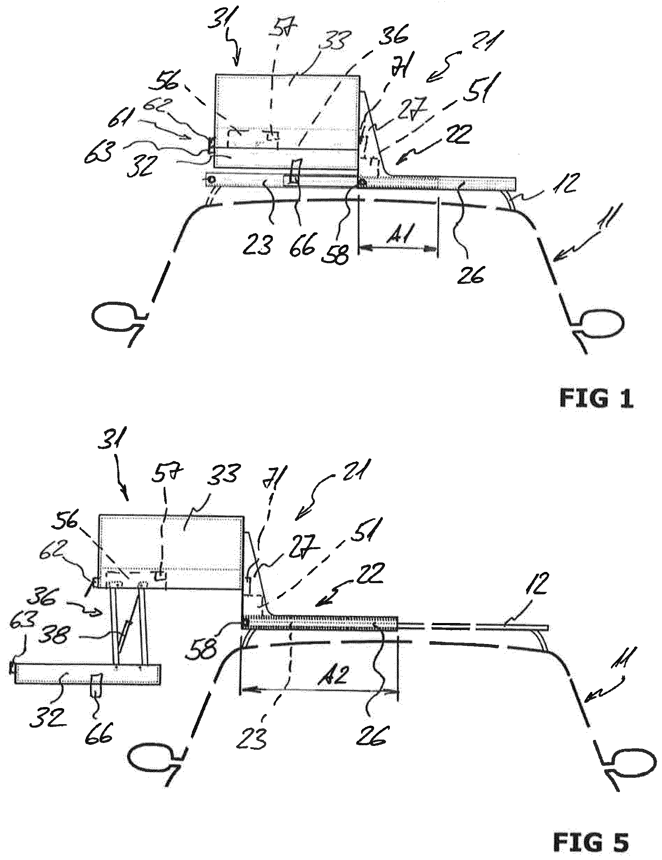

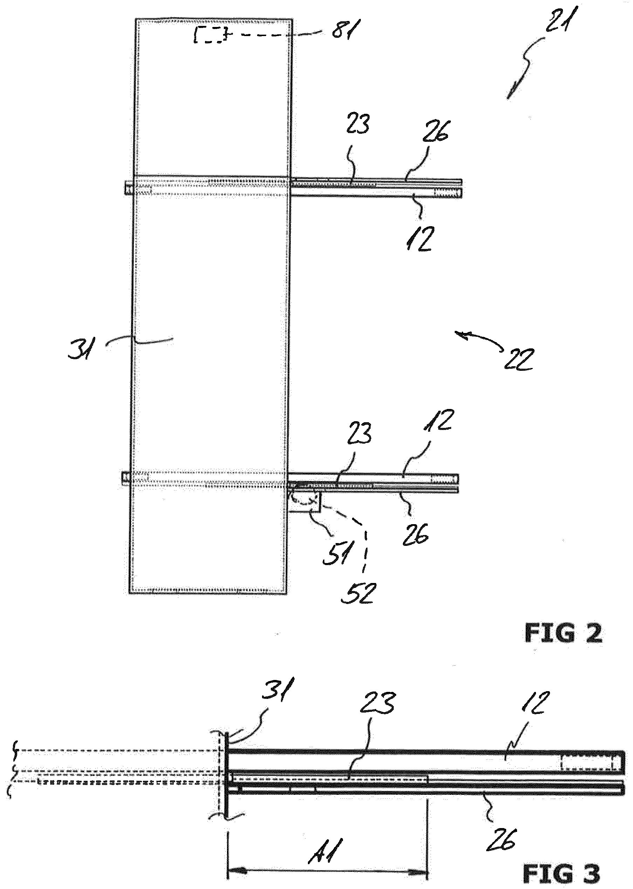

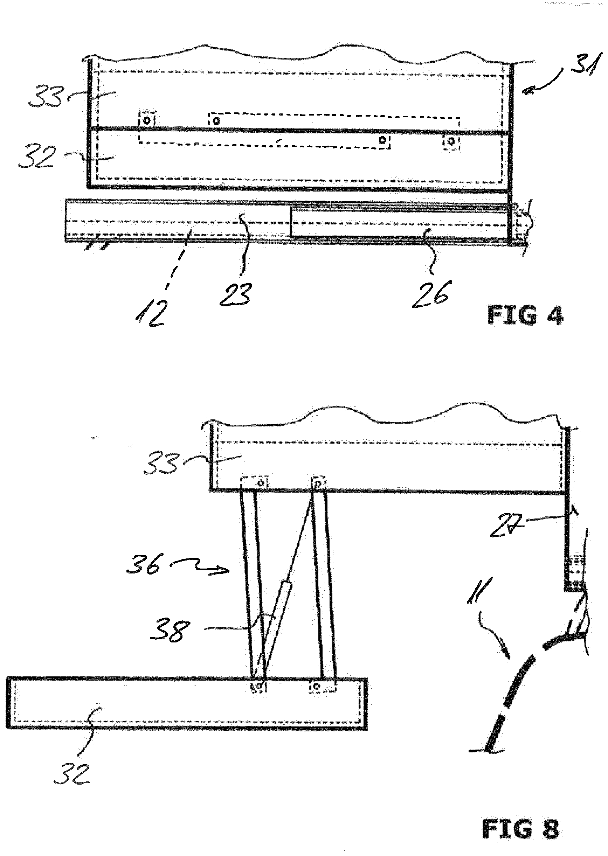

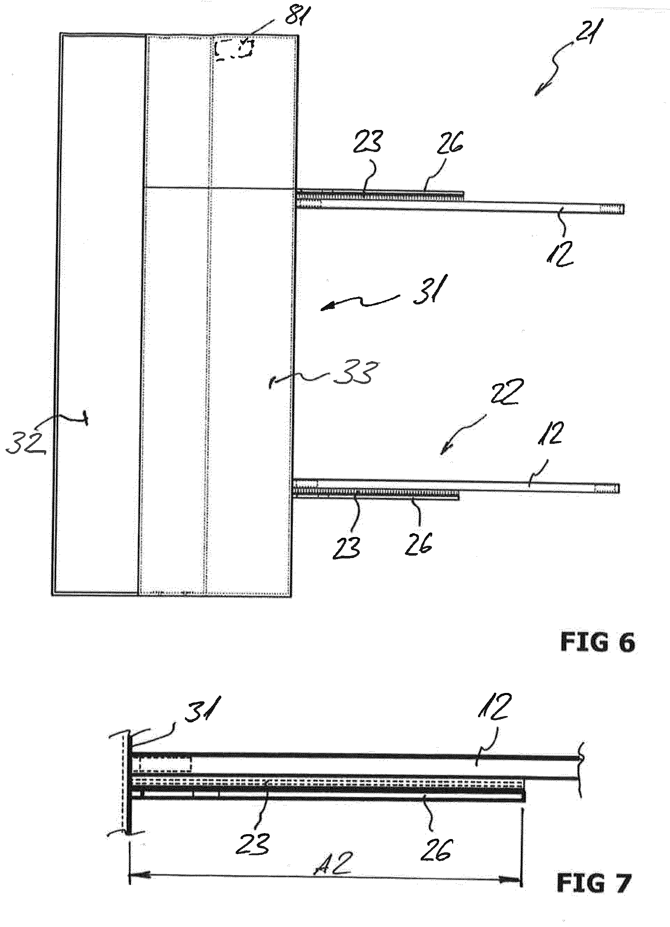

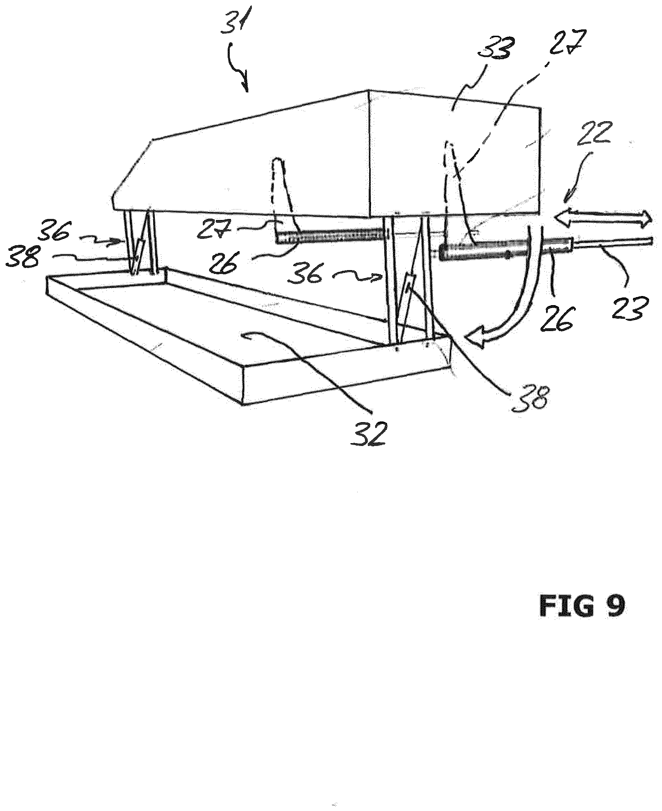

Die Figuren 1 bis 9 zeigen eine Dachtransportvorrichtung 21, die auf Dachträger 12 angeordnet ist, die ihrerseits auf einem Fahrzeug 11 angeordnet sind. Die Dachtransportvorrichtung 21 umfasst einen Transportbehälter 31, der ein Unterteil 32 und ein Oberteil 33 aufweist. Derartige Transportbehälter 31 werden auch Dachboxen genannt.

Mittels besonderer Verfahrens-Technologien ist es möglich einen solchen Transportbehälter 31 hinsichtlich der Aerodynamik und den optimalen Stauraum (Beladevolumen) auszubilden.

Bevorzugt ist der Oberteil 33 des Transportbehälters 31 derart ausgebildet, dass er sich im geschlossenen Zustand des Transportbehälters 31 über den Unterteil 32 des Transportbehälters 31 stülpt, so dass kein Wasser (z. B. Spritzwasser oder Regen) von aussen in den Transportbehälter 31 eindringt.

Der Transportbehälter 31 und insbesondere der Oberteil 33 des Transportbehälters 31 sowie der Unterteil 32 des Transportbehälters 31 können aus verschiedensten Materialien hergestellt werden. Als vorteilhaft haben sich Kunststoffe erwiesen, insbesondere wegen der Anforderungen an den Transportbehälter 31, z.B. hinsichtlich Leichtigkeit und Festigkeit. Die Transportbehälter 31 sind verschiedensten Belastungen ausgesetzt. Sie müssen beispielsweise resistent gegen Witterungseinflüsse, Frost, Hitze, UV-Licht sowie schlagfest und mechanisch belastbar sein.

Weitere vorteilhafte Materialien stellen wegen Ihrer Eigenschaften oder ihrem Erscheinungsbild im verarbeiteten Zustand Kohlefaserwerkstoffe, Thermoplaste oder glasfaserverstärkte Kunststoffe (GFK) dar.

Bevorzugt wird der Transportbehälter 31 mit Verstärkungen, wie beispielsweise Rippen oder Stege, versehen, was auch bei einer geringen Materialstärke des Unterteils 32 und/oder Oberteils 33 des Transportbehälters 31 deren Stabilität gewährleistet. Auch können Einlagen wie z. B. Gewinde für Schrauben ebenfalls schon beim Werkzeugbau integriert werden.

In den Figuren 1 bis 4 ist die Dachtransportvorrichtung 21 in der Transportposition des Transportbehälters 31 dargestellt. In den Figuren 5 bis 9 ist die Dachtransportvorrichtung 21 in der Beladeposition dargestellt.

Die Dachtransportvorrichtung 21 weist eine Auszugseinrichtung 22 auf, mit welcher der Transportbehälter 31 von der Transportposition in die Beladeposition überführbar ist. Die Auszugseinrichtung 22 umfasst stationäre Führungselemente 23, die am Dachträger 12 fest angeordnet sind. Weiter umfasst die Auszugseinrichtung 22 verschiebliche Schiebelemente 26, die relativ zu den Führungselement 23 verschieblich an diesen angeordnet sind. Die Schiebelemente 26 weisen jeweils von diesen abragende Halteabschnitte 27 auf, an denen der Oberteil 33 des Transportbehälters 31 angeordnet ist. Der Transportbehälter 31 ist somit an den Schiebelementen 26 vorgesehen.

In der Transportposition weisen die Schiebeelemente 26 mit den jeweiligen Führungselementen 23 einen überlappenden Bereich A1 auf (siehe insbesondere die Figuren 1 bis 3). In der Beladeposition weisen die Schiebeelemente 26 mit den jeweiligen Führungselementen 23 einen überlappenden Bereich A2 auf (siehe insbesondere die Figuren 5 bis 7). Der überlappende Bereich A2 in der Beladeposition ist grösser als der überlappende Bereich A1 in der Transportposition.

Der Unterteil 32 des Transportbehälters 31 ist über eine Hebeleinrichtung 36 mit dem Oberteil 33 des Transportbehälters 31 verbunden. Die Hebeleinrichtung 36 ist als eine Parallelogramm-Einrichtung ausgebildet. Der Unterteil 32 des Transportbehälters 31 ist zum Beladen des Transportbehälters 31 relativ zu dem Oberteil 33 des Transportbehälters 31 versetzbar beziehungsweise zu diesem verschwenkbar.

Zur Dämpfung beziehungsweise zur Unterstützung des Versetzvorgangs des Unterteils 32 des Transportbehälters 31 ist ein Federelement 38 vorgesehen, dass im vorliegenden Ausführungsbeispiel als einstellbare sowie gesteuerte Gasfeder-Einrichtung ausgebildet ist.

Zum Überführen des Transportbehälters 31 von der Transportposition in die Beladeposition beziehungsweise von der Beladeposition in die Transportposition ist - im vorliegenden Ausführungsbeispiel - bei einem Schiebeelement 26 im Bereich des Halteabschnitts 27 ein erster Antrieb 51 vorgesehen, welcher als Elektromotor ausgebildet ist. Der erste Antrieb 51 weist ein von diesem angetriebenes Reibrad 52 auf, welches hier mit dem Dachträger 12 in Kontakt steht.

Zum Versetzen des Unterteils 32 des Transportbehälters 31 relativ zum Oberteil 33 des Transportbehälters 31 ist ein zweiter Antrieb 56 vorgesehen, der als Elektromotor ausgebildet ist und auf die Hebeleinrichtung 36 einwirkt.

Eine erste Verriegelungseinrichtung 61 ist vorgesehen, welche den Unterteil 32 des Transportbehälters 31 mit dem Oberteil 33 des Transportbehälters 31 in der Transportposition verriegelt. Die erste Verriegelungseinrichtung 61 weist ein Schnallenteil 62, das an dem Oberteil 33 des Transportbehälters 31 angeordnet ist, sowie ein Schnallengegenteil 63 auf, das an dem Unterteil 32 des Transportbehälters 31 angeordnet ist.

Eine zweite Verriegelungseinrichtung 66 ist vorgesehen, welche den Transportbehälter 31 in der Transportposition verriegelt. Im vorliegenden Ausführungsbeispiel ist die zweite Verriegelungseinrichtung 66 derart ausgebildet, dass die Auszugseinrichtung 22 in der Transportposition mittels derselben ebenfalls verriegelt wird. Alternativ kann für die Verriegelung der Auszugseinrichtung 22 eine separate Verriegelungseinrichtung vorgesehen werden.

Zumindest eine der Verriegelungseinrichtungen 61 oder 66 ist mit einer Zentralverriegelungseinrichtung des Fahrzeuges 11 gekoppelt.

Eine Blockiereinrichtung ist vorgesehen, welche einen Versetzvorgang des Unterteils 32 des Transportbehälters 31 relativ zum Oberteil 33 des Transportbehälters 31 in einem teilweise ausgefahrenen Zustand der Auszugseinrichtung 22 verhindert. Im vorliegenden Ausführungsbeispiel ist die Blockiereinrichtung durch die Steuerung 57 des zweiten Antriebs 56 gebildet, welche mit einem Sensor 58 verbunden ist. Der Sensor 58 erfasst die exakte Position des Schiebeelementes 26 zum stationären Führungselement 23 oder zum Dachträger 12.

Zur Versorgung der Antriebe 51 und 56 ist eine Batterie als Energieversorgungseinrichtung 71 vorgesehen, welche mit den Antrieben 51 und 56 jeweils verbunden ist. Sofern eine der Verriegelungsvorrichtungen 61 und/oder 66 motorisch oder elektromagnetisch ausgebildet ist, können diese ebenfalls mit der Energieversorgungseinrichtung 71 zur Versorgung mit Energie verbunden sein. Dies gilt ebenfalls für eine Blockiereinrichtung, z. B. wenn diese als eine separate Einrichtung ausgebildet ist.

Die Dachtransportvorrichtung 21 weist beispielsweise einen Höhensensor 81 als zumindest eine Sensoreinrichtung auf, die bei der Einfahrt des Fahrzeuges 11 in einen Raum eine Raumhöhe des Raumes erfasst und ein Warnsignal erzeugt, sofern die Raumhöhe kleiner als die Gesamthöhe aus der Höhe des Fahrzeuges 11 samt Dachträger 12 und der Höhe des Transportbehälters 31 ist. Dieser Höhensensor 81 ist bevorzugterweise an dem Transportbehälter 31 angeordnet.

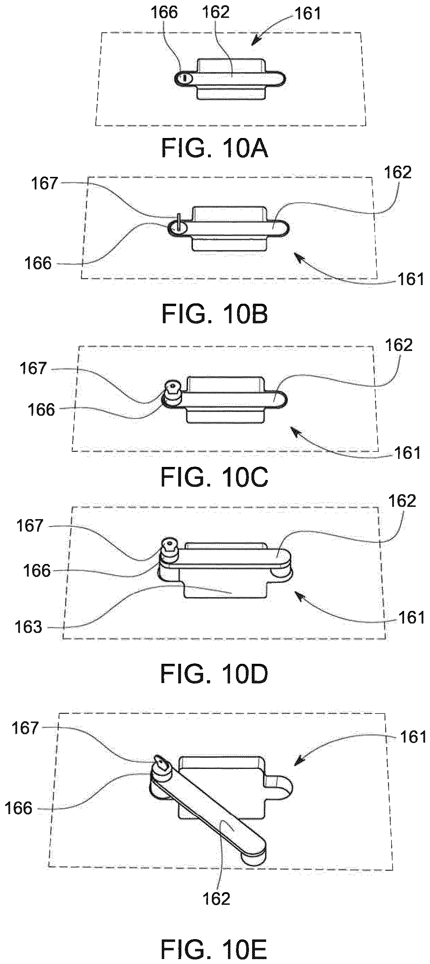

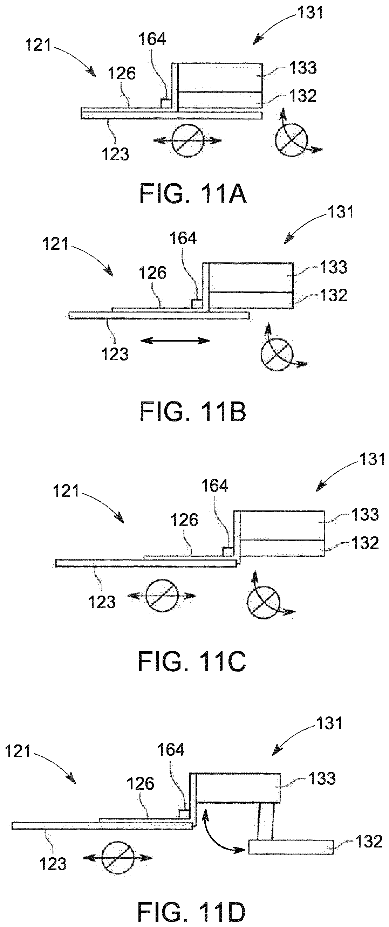

Anhand der Figuren 10A bis 10E und den Figuren 11A bis 11D wird nachfolgend das Verfahren zum Öffnen und zum Verriegeln des Transportbehälters 131 beschrieben.

Die Dachtransportvorrichtung 121 weist einzelne oder alle im Zusammenhang mit der Dachtransportvorrichtung 21 beschriebenen Merkmale auf. Die erste Verriegelungseinrichtung 161 weist als Bedienelement 162 einen Griff auf, der in verschiedenen Positionen den Unterteil 132 und den Oberteil 133 des Transportbehälters 131 miteinander verriegelt oder den Unterteil 132 von dem Oberteil 133 entriegelt.

Fig. 11A zeigt die Dachtransportvorrichtung 121 in der Fahrposition, in welcher der Unterteil 132 des Transportbehälters 131 mit dessen Oberteil 133 verriegelt ist. Das Bedienelement 162 befindet sich in der Stellung, wie in der Figur 10A gezeigt, und es befindet sich kein Schlüssel 167 im Schloss 166. Über eine zweite Verriegelungseinrichtung 164 ist das Schiebeelement 126 der Dachtransportvorrichtung 121 an dem Führungselement 123 der Dachtransportvorrichtung 121 unverschieblich gehalten.

Um den Transportbehälter 131 aus der Fahrposition zu verschieben, wird der Schlüssel 167 in das Schloss 166 eingeführt (Fig. 10B) und gedreht (Fig. 10C), wobei die zweite Verriegelungseinrichtung 164 entriegelt wird. Damit lässt sich das Schiebeelement 126 relativ zum Führungselement 123 durch Ziehen am Bedienelement 162 verschieben, wobei der am Schiebeelement 126 angeordnete Transportbehälter 131 ebenfalls verschoben wird (Fig. 11B). Da in diesem Zustand der Unterteil 132 des Transportbehälters 131 weiterhin mit dessen Oberteil 133 verriegelt ist, ist ein unerwünschtes Herunterklappen des Unterteils 132 verhindert.

Um den Transportbehälter 131 in eine Beladeposition (Fig. 11D) zu bringen, wird weiter am Bedienelement 162 gezogen, wobei das Bedienelement 162 aus einer Vertiefung 163 am Transportbehälter 131 austritt und drehbar wird (Fig. 10D). Das Schiebeelement 126 ist über die zweite Verriegelungseinrichtung 164 in der in der Fig. 11C dargestellten Position verriegelt. Auch in diesem Zustand ist der Unterteil 132 des Transportbehälters 131 weiterhin mit dessen Oberteil 133 verriegelt, so dass ein unerwünschtes Herunterklappen des Unterteils 132 verhindert ist.

Um ein Herunterklappen des Unterteils 132 und somit ein Entladen beziehungsweise ein Beladen des Transportbehälters 131 zu ermöglichen, wird das Bedienelement 162 gedreht (Fig. 10E), wobei die erste Verriegelungseinrichtung 161 entriegelt wird und somit der Unterteil 132 zu dem Oberteil 133 versetzbar ist (Fig. 11D). In dieser Beladeposition ist das Schiebeelement 126 über die zweite Verriegelungseinrichtung 164 weiterhin in der dargestellten Position verriegelt.

Um den Transportbehälter 131 zu Schliessen wird der Unterteil 132 z. B. über das Bedienelement 162 zugedrückt, wobei vorteilhaft eine Verriegelung der ersten Verriegelungseinrichtung 161 provisorisch einschnappt. Das Bedienelement 162 wird von der in der Fig. 10E dargestellten Position in die Position gedreht, wie sie in der Fig. 10D dargestellt ist.

Nun befindet sich der Transportbehälter 131 in der Position, wie in der Fig. 11C dargestellt. Das Schiebeelement 126 ist weiterhin über die zweite Verriegelungseinrichtung 164 in der in der Fig. 11C dargestellten Position verriegelt. In diesem Zustand ist der Unterteil 132 des Transportbehälters 131 mit dessen Oberteil 133 verriegelt, so dass ein unerwünschtes Herunterklappen des Unterteils 132 verhindert ist.

Um die zweite Verriegelungseinrichtung 164 zu entriegeln, wird das Bedienelement 162 von der in der Fig. 10D dargestellten Position in die Position gedrückt, wie sie in der Fig. 10C dargestellt ist. Um eine einwandfreie Verriegelung des Unterteils 132 mit dem Oberteil 133 zu gewährleisten, funktioniert dieser Vorgang vorteilhaft nur dann, wenn der Unterteil 132 zu dem Oberteil 133 korrekt ausgerichtet ist. Infolge des Eindrückens des Bedienelements 162 wird beispielsweise über einen Mechanismus oder über eine Steuerung die zweite Verriegelungseinrichtung 164 entriegelt, wodurch das Schiebeelement 126 und somit der Transportbehälter 131 relativ zum Führungselement 123 verschiebbar sind (Fig. 11B).

Um den Transportbehälter 131 in seine Fahrposition zu bringen, wird dieser z. B. durch Druck auf das Bedienelement 162 verschoben, bis die zweite Verriegelungseinrichtung 164 erneut verriegelt (Fig. 11A). Nun wird der Schlüssel 167 eingedrückt, gedreht (Fig. 10B) und abgezogen (Fig. 10A). Um eine einwandfreie Verriegelung des Transportbehälters 131 zu gewährleisten, funktioniert dieser Vorgang vorteilhaft nur dann, wenn das Schiebeelement 126 entsprechend relativ zum Führungselement 123 korrekt ausgerichtet ist.

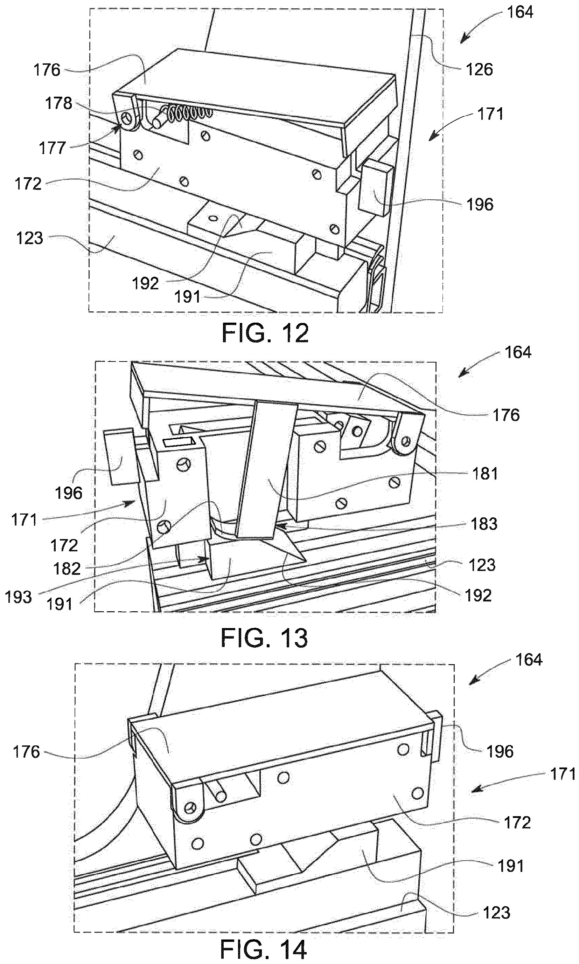

Wie in den Figuren 12 bis 14 gezeigt, umfasst die zweite Verriegelungseinrichtung 164 ein Blockierelement 171 sowie ein Rampenelement 191 und ein Entriegelungselement 196.

Das Blockierelement 171 ist an dem Schiebeelement 126 angeordnet und mit diesem relativ zu dem Führungselement 123 verschiebbar. Das Blockierelement 171 weist einen Grundkörper 172 sowie einen Verriegelungshebel 176 auf, der über ein an einem Ende vorgesehenen Gelenk 177 schwenkbar an dem Grundkörper 172 angeordnet ist. Der Verriegelungshebel 176 steht vorteilhaft über eine Zugfeder 178 mit dem Grundkörper 172 in Verbindung, so dass der Verriegelungshebel 176 in eine Verriegelungsposition federbeaufschlagt ist.

Wie aus der Fig. 13 ersichtlich, ragt von dem Verriegelungshebel 176 ein Betätigungsabschnitt 181 ab, an dessen freien Ende ein Gleitabschnitt 182 vorgesehen ist.

An dem Führungselement 123 ist das Rampenelement 191 vorgesehen. Der Rampenabschnitt 192 steigt in Richtung des freien Endes des Führungselements 123 an. An dem des Rampenabschnitts 192 gegenüberliegenden Ende des Rampenelements 191 ist ein Anlageabschnitt 193 vorgesehen.

Wird das Schiebeelement 126 in die Beladeposition überführt, gleitet der Gleitabschnitt 182 über den Rampenabschnitt 192, wobei der Verriegelungshebel 176 von dem Grundkörper 172 entgegen der Federkraft abgehoben wird. Sobald der Hintergreifabschnitt 183 des Betätigungsabschnitts 181 das Ende des Rampenelements 191 erreicht, rutscht dieser in Richtung des Führungselements 123, wobei der Hintergreifabschnitt 183 des Betätigungsabschnitts 181 mit dem Anlageabschnitt 193 des Rampenelements 191 in Anlage kommt. In diesem Zustand ist die zweite Verriegelungseinrichtung 164 verriegelt.

Um die Verriegelungseinrichtung 164 zu entriegeln, wird das Entriegelungselement 196 relativ zum Führungselement 123 wegbewegt, womit der Betätigungsabschnitt 181 des Verriegelungshebels 176 von dem Rampenelement 191 abgehoben und somit das Schiebeelement 126 wieder relativ zum Führungselement 123 verschiebbar wird. Vorteilhaft ist das Entriegelungselement 196 der zweiten Verriegelungseinrichtung 164 mit dem Bedienelement 162 der ersten Verriegelungseinrichtung 161 gekoppelt, beispielsweise mechanisch, so dass bei einer bestimmten Betätigung des Bedienelements 162 der ersten Verriegelungseinrichtung 161 auch das Entriegelungselement 196 der zweiten Verriegelungseinrichtung 164 betätigt wird.

Vorteilhaft ist an dem Führungselement 123 beabstandet zum einen Rampenelement 191 ein weiteres Rampenelement (hier nicht dargestellt) vorgesehen, womit das Schiebeelement 126 mit dem Führungselement 123 in der Fahrposition des Transportbehälters 131 vorteilhaft in analoger Art und Weise verriegelbar und entriegelbar ist.

### Bezugszeichenliste

- 11: Fahrzeug
- 12: Dachträger

- 21: Dachtransportvorrichtung
- 22: Auszugseinrichtung
- 23: Führungselement

- 26: Schiebeelement
- 27: Halteabschnitt

- 31: Transportbehälter
- 32: Unterteil v. 31
- 33: Oberteil v. 31

- 36: Hebeleinrichtung

- 38: Federelement

- 51: 1. Antrieb
- 52: Reibrad v. 51

- 56: 2. Antrieb
- 57: Steuerung v. 56
- 58: Sensor f. 57

- 61: 1. Verriegelungseinrichtung
- 62: Schnallenteil
- 63: Schnallengegenteil

- 66: 2. Verriegelungseinrichtung

- 71: Energieversorgungseinrichtung

- 81: Höhensensor

- A1: überlappender Bereich
- A2: überlappender Bereich

- 121: Dachtransportvorrichtung

- 123: Führungselement

- 126: Schiebeelement

- 131: Transportbehälter
- 132: Unterteil v. 131
- 133: Oberteil v. 131

- 161: 1. Verriegelungseinrichtung
- 162: Bedienelement
- 163: Vertiefung
- 164: 2. Verriegelungseinrichtung

- 166: Schloss
- 167: Schlüssel

- 171: Blockierelement
- 172: Grundkörper

- 176: Verriegelungshebel
- 177: Gelenk
- 178: Zugfeder

- 181: Betätigungsabschnitt
- 182: Gleitabschnitt
- 183: Hintergreifabschnitt

- 191: Rampenelement
- 192: Rampenabschnitt
- 193: Anlageabschnitt

- 196: Entriegelungselement

## Patentansprüche

1. Dachtransportvorrichtung zur Anordnung auf einem Fahrzeug (11) mit einem Transportbehälter (31; 131) und mit einer Auszugseinrichtung (22), mit welcher der Transportbehälter (31; 131) von einer Transportposition in eine Beladeposition überführbar ist, wobei die Auszugseinrichtung (22) zumindest ein stationäres Führungselement (23; 123) sowie zumindest ein an dem Führungselement (23; 123) relativ zu diesem verschiebliches Schiebelement (26; 126) umfasst, und der Transportbehälter (31; 131) an dem zumindest einen Schiebeelement (23; 123) vorgesehen ist, **dadurch gekennzeichnet, dass** ein überlappender Bereich (A2) des zumindest einen Schiebeelementes (26; 126) mit dem zumindest einen Führungselement (23; 123) in der Beladeposition grösser als in der Transportposition ist.

2. Dachtransportvorrichtung nach Anspruch 1, **dadurch gekennzeichnet, dass** der Transportbehälter (31; 131) ein Unterteil (32; 132) und ein Oberteil (33; 133) umfasst, wobei der Unterteil (32; 132) über eine Hebeleinrichtung (36), vorzugsweise über eine Parallelogramm-Einrichtung, mit dem Oberteil (33; 133) verbunden und zum Beladen des Transportbehälters (31) relativ zu dem Oberteil (33; 133) versetzbar ist.

3. Dachtransportvorrichtung nach Anspruch 1 oder 2, **dadurch gekennzeichnet, dass** zumindest ein Federelement (38) zur Dämpfung beziehungsweise zur Unterstützung des Versetzvorgangs des Unterteils (32; 132) des Transportbehälters (31; 131) vorgesehen ist, wobei bevorzugt das zumindest eine Federelement (38) einstellbar und weiter bevorzugt gesteuert ist.

4. Dachtransportvorrichtung nach Anspruch 2 oder 3, **dadurch gekennzeichnet, dass** zumindest ein Antrieb (51, 56) zum Überführen des Transportbehälters (31) von der Transportposition in die Beladeposition beziehungsweise von der Beladeposition in die Transportposition vorgesehen ist und/oder zum Versetzen des Unterteils (32) des Transportbehälters (31) relativ zum Oberteil (33) des Transportbehälters (31) vorgesehen ist.

5. Dachtransportvorrichtung nach einem der Ansprüche 1 bis 4, **dadurch gekennzeichnet, dass** zumindest eine Verriegelungseinrichtung (61, 66; 161, 164) vorgesehen ist, welche den Unterteil (32; 132) des Transportbehälters (31; 131) mit dem Oberteil (33; 133) des Transportbehälters (31; 131), insbesondere in der Transportposition, verriegelt und/oder den Transportbehälter (31; 131), insbesondere in der Transportposition, und/oder die Auszugseinrichtung (22), insbesondere in der Transportposition, verriegelt.

6. Dachtransportvorrichtung nach Anspruch 5, **dadurch gekennzeichnet, dass** die zumindest eine Verriegelungseinrichtung (61, 66) mit einer Zentralverriegelungseinrichtung des Fahrzeuges (11) gekoppelt ist.

7. Dachtransportvorrichtung nach Anspruch 5 oder 6, **dadurch gekennzeichnet, dass** die zumindest eine Verriegelungseinrichtung (164) einen Verriegelungshebel (176) und ein Rampenelement (191) umfasst, wobei der Verriegelungshebel (176) über das Rampenelement (191) in eine Verriegelungsposition überführbar ist, wobei der Verriegelungshebel (176) derart ausgebildet ist, dass der Verriegelungshebel (176) aus der Verriegelungsposition in eine Entriegelungsposition überführbar ist.

8. Dachtransportvorrichtung nach Anspruch 7, **dadurch gekennzeichnet, dass** zumindest ein Entriegelungselement (196) vorgesehen ist, über welches der Verriegelungshebel (176) aus der Verriegelungsposition in die Entriegelungsposition überführbar ist.

9. Dachtransportvorrichtung nach Anspruch 7 oder 8, **dadurch gekennzeichnet, dass** der Verriegelungshebel (176) federbeaufschlagt ist, wobei die Federkraft vorteilhaft in Richtung der Verriegelungsposition des Verriegelungshebels (176) wirkt.

10. Dachtransportvorrichtung nach einem der Ansprüche 1 bis 9, **dadurch gekennzeichnet, dass** zumindest eine Blockiereinrichtung vorgesehen ist, welche einen Versetzvorgang des Unterteils (32; 132) des Transportbehälters (31; 131) relativ zum Oberteil (33; 133) des Transportbehälters (31; 131) in einem teilweise ausgefahrenen Zustand der Auszugseinrichtung (22) verhindert.

11. Dachtransportvorrichtung nach Anspruch 10, **dadurch gekennzeichnet, dass** die zumindest eine Blockiereinrichtung Bestandteil einer der zumindest einen Verriegelungseinrichtungen (61, 66; 161, 164) ist.

12. Dachtransportvorrichtung nach einem der Ansprüche 4 bis 11, **dadurch gekennzeichnet, dass** zumindest eine Energieversorgungseinrichtung (71) zur Versorgung mit Energie des zumindest einen Antriebs (51, 56) und/oder der zumindest einen Verriegelungsvorrichtung (61, 66) und/oder der zumindest einen Blockiereinrichtung vorgesehen ist.

## Claims

1. A roof transport device to be arranged on a vehicle (11) with a transport container (31; 131) and with a removal device (22), with which the transport container (31; 131) can be transferred from a transport position into a loading position, wherein the removal device (22) comprises at least one stationary guide element (23; 123) as well as at least one sliding element (26; 126) that can be displaced on the guide element (23; 123) relative to the latter, and the transport container (31; 131) is provided on the at least one sliding element (23; 123), **characterized in that** an overlapping area (A2) of the at least one sliding element (26; 126) is larger with the at least one guide element (23; 123) in the loading position than in the transport position.

2. The roof transport device according to claim 1, **characterized in that** the transport container (31; 131) comprises a lower part (32; 132) and an upper part (33; 133), wherein the lower part (32, 132) can be connected with the upper part (33; 133) via a lever arrangement (36), preferably via a parallelogram arrangement, and can be displaced relative to the upper part (33; 133) for loading the transport container (31).

3. The roof transport device according to claim 1 or 2, **characterized in that** at least one spring element (38) is provided for attenuating or supporting the process of displacing the lower part (32; 132) of the transport container (31; 131), wherein the at least one spring element (38) can preferably be adjusted and further preferably is controlled.

4. The roof transport device according to claim 2 or 3, **characterized in that** at least one drive (51, 56) is provided for transferring the transport container (31) from the transport position into the loading position or from the loading position into the transport position and/or for displacing the lower part (32) of the transport container (31) relative to the upper part (33) of the transport container (31).

5. The roof transport device according to one of claims 1 to 4, **characterized in that** at least one locking device (61, 66; 161, 164) is provided, which locks the lower part (32; 132) of the transport container (31; 131) with the upper part (33; 133) of the transport container (31; 131), in particular in the transport position, and/or locks the transport container (31; 131), in particular in the transport position, and/or the removal device (22), in particular in the transport position.

6. The roof transport device according to claim 5, **characterized in that** the at least one locking device (61, 66) is coupled with a central locking device of the vehicle (11).

7. The roof transport device according to claim 5 or 6, **characterized in that** the at least one locking device (164) comprises a locking lever (176) and a ramp element (191), wherein the locking lever (176) can be transferred into a locking position via the ramp element (191), wherein the locking lever (176) is designed in such a way that the locking lever (176) can be transferred from the locking position into an unlocking position.

8. The roof transport device according to claim 7, **characterized in that** at least one unlocking element (196) is provided, which can be used to transfer the locking lever (176) from the locking position into the unlocking position.

9. The roof transport device according to claim 7 or 8, **characterized in that** the locking lever (176) is spring loaded, wherein the spring force advantageously acts in the direction of the locking position of the locking lever (176).

10. The roof transport device according to one of claims 1 to 9, **characterized in that** at least one blocking device is provided, which prevents a process in which the lower part (31; 132) of the transport container (31; 131) is displaced relative to the upper part (33; 133) of the transport container (31; 131) in a partially extended state of the removal device (22).

11. The roof transport device according to claim 10, **characterized in that** the at least one blocking device is part of one of the at least one locking devices (61, 66; 161, 164).

12. The roof transport device according to one of claims 4 to 11, **characterized in that** at least one energy supply device (71) is provided to supply energy to the at least one drive (51, 56) and/or the at least one locking device (61, 66) and/or the at least one blocking device.

## Revendications

1. Dispositif de transport sur le toit, destiné à être placé sur un véhicule (11), pourvu d'un conteneur de transport (31 ; 131) et d'un système d'extraction (22), à l'aide duquel le conteneur de transport (31 ; 131) est transférable d'une position de transport dans une position de chargement, le système d'extraction (22) comprenant au moins un élément de guidage (23 ; 123) stationnaire, ainsi qu'au moins un élément coulissant (26 ; 126) déplaçable sur l'élément de guidage (23 ; 123) par rapport à celui-ci, et le conteneur de transport (31 ; 131) étant prévu sur l'au moins un élément coulissant (23 ; 123), **caractérisé en ce que** dans la position de chargement, une zone de chevauchement (A2) de l'au moins un élément coulissant (26 ; 126) avec l'au moins un élément de guidage (23 ; 123) est plus grande que dans la position de transport.

2. Dispositif de transport sur le toit selon la revendication 1, **caractérisé en ce que** le conteneur de transport (31 ; 131) comprend une partie inférieure (32 ; 132) et une partie supérieure (33 ; 133), la partie inférieure (32 ; 132) étant reliée par l'intermédiaire d'un système à levier (36), de préférence d'un système en parallélogramme avec la partie supérieure (33 ; 133) et pour charger le conteneur de transport (31), étant déplaçable par rapport à la partie supérieure (33 ; 133).

3. Dispositif de transport sur le toit selon la revendication 1 ou 2, **caractérisé en ce qu'**il est prévu au moins un élément à ressort (38), destiné à amortir, respectivement à assister le processus de déplacement de la partie inférieure (32 ; 132) du conteneur de transport (31 ; 131), de préférence l'au moins un élément à ressort (38) étant réglable et de manière plus préférentielle, étant commandé.

4. Dispositif de transport sur le toit selon la revendication 2 ou 3, **caractérisé en ce qu'**il est prévu au moins un entraînement (51, 56), destiné à transférer le conteneur de transport (31) de la position de transport dans la position de chargement, respectivement de la position de chargement dans la position de transport et/ou pour déplacer la partie inférieure (32) du conteneur de transport (31) par rapport à la partie supérieure (33) du conteneur de transport (31).

5. Dispositif de transport sur le toit selon l'une quelconque des revendications 1 à 4, **caractérisé en ce qu'**il est prévu au moins un système de verrouillage (61 , 66 ; 161, 164), lequel verrouille la partie inférieure (32 ; 132) du conteneur de transport (31 ; 131) avec la partie supérieure (33 ; 133) du conteneur de transport (31 ; 131), notamment dans la position de transport, et/ou verrouille le conteneur de transport (31 ; 131), notamment dans la position de transport, et/ou verrouille le système d'extraction (22), notamment dans la position de transport.

6. Dispositif de transport sur le toit selon la revendication 5, **caractérisé en ce que** l'au moins un système de verrouillage (61, 66) est accouplé avec un système de verrouillage centralisé du véhicule (11).

7. Dispositif de transport sur le toit selon la revendication 5 ou 6, **caractérisé en ce que** l'au moins un système de verrouillage (164) comprend un levier de verrouillage (176) et un élément formant rampe (191), le levier de verrouillage (176) étant transférable par l'intermédiaire de l'élément formant rampe (191) dans une position de verrouillage, le levier de verrouillage (176) étant conçu de telle sorte, que le levier de verrouillage (176) soit transférable de la position de verrouillage dans une position de déverrouillage.

8. Dispositif de transport sur le toit selon la revendication 7, **caractérisé en ce qu'**il est prévu au moins un élément de déverrouillage (196), par l'intermédiaire duquel le levier de verrouillage (176) est transférable de la position de verrouillage dans la position de déverrouillage.

9. Dispositif de transport sur le toit selon la revendication 7 ou 8, **caractérisé en ce que** le levier de verrouillage (176) est soumis à un ressort, la force du ressort agissant avantageusement dans la direction de la position de verrouillage du levier de verrouillage (176).

10. Dispositif de transport sur le toit selon l'une quelconque des revendications 1 à 9, **caractérisé en ce qu'**il est prévu au moins un système de blocage, lequel empêche un processus de déplacement de la partie inférieure (32 ; 132) du conteneur de transport (31 ; 131) par rapport à la partie supérieure (33 ; 133) du conteneur de transport (31 ; 131) dans une position partiellement sortie du système d'extraction (22).

11. Dispositif de transport sur le toit selon la revendication 10, **caractérisé en ce que** l'au moins un système de blocage est une partie intégrante de l'un de l'au moins un système de verrouillage (61, 66 ; 161, 164).

12. Dispositif de transport sur le toit selon l'une quelconque des revendications 4 à 11, **caractérisé en ce qu'**il est prévu au moins un système d'alimentation en énergie (71), destiné à alimenter en énergie l'au moins un entraînement (51, 56) et/ou l'au moins un dispositif de verrouillage (61, 66) et/ou l'au moins un système de blocage.
